# EUROPÄISCHE PATENTSCHRIFT

(11) **EP 3 233 231 B1**
(45) Veröffentlichungstag und Bekanntmachung des Hinweises auf die Patenterteilung: **22.08.2018**
(21) Anmeldenummer: 15822913.8
(22) Anmeldetag: 18.12.2015
(51) Int. Cl.: B01D 17/02, C02F 1/28, E02B 15/10

(54) **VERFAHREN ZUR TRENNUNG VON FLÜSSIGKEITEN UND DESSEN VERWENDUNG**
METHOD FOR SEPARATING LIQUIDS AND USE THEREOF
PROCÉDÉ DE SÉPARATION DE LIQUIDES, ET UTILISATION DUDIT PROCÉDÉ

(30) Priorität: 19.12.2014 DE 102014119183
(43) Veröffentlichungstag der Anmeldung: 25.10.2017
(73) Patentinhaber: Karlsruher Institut für Technologie, 76131 Karlsruhe (DE)
(72) Erfinder: ZEIGER, Claudia, 76185 Karlsruhe (DE); HÖLSCHER, Hendrik, 76356 Weingarten (DE); WORGULL, Matthias, 76297 Stutensee (DE); KAVALENKA, Maryna, 76131 Karlsruhe (DE)
(86) Internationale Anmeldenummer: PCT/EP2015/002554
(87) Internationale Veröffentlichungsnummer: WO 2016/096142

(56) Entgegenhaltungen:
- DE-A1- 2 609 847
- DE-A1-102008 057 346
- DE-A1-102013 109 621
- US-A- 3 539 508
- US-A- 4 123 354
- US-A1- 2010 200 512

## Beschreibung

Die Erfindung betrifft ein Verfahren zur Trennung einer Flüssigkeit von einem Formkörper und dessen Verwendung zur mehrfachen Trennung von Flüssigkeiten und zur kontinuierlichen Trennung einer Flüssigkeit von einem Formkörper.

Durch Katastrophen wie die Explosion der Ölplattform Deepwater Horizon im Jahr 2010, aber auch durch ölhaltige Industrieabwässer, die unsachgemäße Entsorgung von Altöl oder leckende Tanks gelangen immer wieder unüberschaubar große Mengen Öl in die Umwelt und verursachen dort massive, langfristige Schäden. Zu den konventionellen Methoden zur Bekämpfung einer Ölpest zählen die chemische Dispergierung und die kontrollierte Verbrennung des Öls. Beide Methoden bewirken jedoch in erster Linie nur eine Verlagerung der Problematik, da durch sie neue Umweltgefahren entstehen.

Als Mittel der Wahl gilt deshalb das frühzeitige Abschöpfen des an der Wasseroberfläche schwimmenden Öls. Um das Abschöpfen des Öls effizienter zu gestalten, werden Absorbenzien, wie beispielsweise Sägespäne, Reisstroh oder Baumwolle eingesetzt. Der große Nachteil derartiger Sorbenzien liegt jedoch darin, dass sie außer dem Öl auch eine große Menge Wasser aufnehmen. Die fehlende Selektivität erfordert eine nachgelagerte Trennung von Öl und ungewollt aufgenommenem Wasser. Die Trennung des Öls von den verwendeten Sorbenzien ist aufwändig bis unmöglich.

Dieser Nachteil wurde dadurch behoben, dass Sorbenzien hergestellt wurden, die eine selektive Aufnahme des Öls gewährleisten. Korhonen et al. beschreibt in [1] Aerogele, die unpolare Flüssigkeiten und Öle selektiv aus dem Wasser aufnehmen. DE 10 2013 109 621 A1 beschreibt ein Verfahren zur Herstellung eines Formkörpers mit superhydrophoben Oberflächen hinsichtlich einer selektiven Aufnahme einer unpolaren Flüssigkeit.

In einem ersten Schritt werden die Hilfsmittel auf der Oberfläche des verschmutzten Gewässers verteilt, wo sie das Öl mehr oder weniger selektiv aufnehmen. In einem zweiten Schritt werden die Sorbenzien mit dem Öl von der Wasseroberfläche abgeschöpft, um in einen dritten Schritt die nachgelagerte Trennung, die Wiederaufbereitung, oder die thermische Verwertung durchführen zu können. Der große Nachteil dieser Sorbenzien liegt darin, dass sie nicht mehrfach verwendet werden können und somit enorme Mengen an Müll verursacht werden. Eine Wiederverwendung wäre nur über eine aufwändige Wiederaufbereitung oder zusätzliche Mengen an Abfällen möglich. Zudem wird riskiert, dass die Sorbenzien nicht vollständig wieder aus dem Gewässer entfernt werden können, und dass so umweltschädliches Material in die Umwelt eingebracht wird. Ein weiterer großer Nachteil dieser Möglichkeiten zur Reinigung von Gewässern liegt in ihrem sequenziellen Charakter, was insbesondere bei großen Ölmengen nachteilig ist.

Bei dem in DE 10 2013 109 621 A1 beschriebenen Formkörper ist das Problem des Trennens von Öl und Polymer nicht.gelöst, die Rückgewinnung des Öls ist nicht sichergestellt. Da dieser nicht mehrfach verwendet werden kann, entstehen große Mengen Abfall. Da das Trennen des Öls von der Polymeroberfläche nicht ermöglicht wurde, muss das Polymer mitsamt dem Öl aufwändig entsorgt werden.

Kontinuierliche Prozesse zum Entfernen von Öl aus ölverschmutztem Wasser erfolgt mittels Ölskimmer, auch Oberflächenabsauger genannt.

Wehrskimmer nutzen ausschließlich den Dichteunterschied von Wasser und Öl. Das auf der Wasseroberfläche schwimmende Öl läuft über eine dicht unter der Wasseroberfläche schwimmende Kante in einen Behälter und wird abgepumpt [2]. Der Nachteil dabei ist die mangelnde Selektivität, die verursacht, dass insbesondere bei geringen Ölmengen bzw. dünnen Ölfilmen auf der Wasseroberfläche, große Mengen Wasser mit abgepumpt werden.
Bei Adhäsionsskimmern (Schlauch-/Band-/Scheibenskimmern) wie z.B. in DE2609847A1 und US4123354A bewegt sich eine Oberfläche (Schlauch/Band/Scheibe) durch das Wasser. Das Öl bleibt an der Oberfläche haften, und wird über einem Sammelbehälter abgestreift [2, 3]. Die verfügbaren Band-, Schlauch- oder Scheibenskimmer eignen sich zur Reinigung von Kühlschmierstoffen. Um Ölverschmutzungen aus Flüssen oder Seen zu entfernen ist die Reinigungsleistung jedoch zu gering (ca. 5 bis 25 l/h). Aufgrund der Funktionsweise ist außerdem nur der Einsatz auf ruhenden Gewässern möglich. Darüber hinaus ist die Schichtdicke des Öls, für die diese Skimmer geeignet sind, nach unten begrenzt. Ist die Schichtdicke zu gering, werden große Mengen Wasser mit ausgetragen [3].
Für größere Öl/Wassermengen werden Öle durch öladhäsive Trommeln von der Wasseroberfläche entfernt, und durch Abschaben von den Trommeln getrennt [4]. Da beim Trommelskimmer das aufgenommene Öl von der Oberfläche abgestreift wird, können hier nur glatte Oberflächen eingesetzt werden. Der bereits erreichte Restwasseranteil bei Trommelskimmer liegt bei 2 % [4] .
Ausgehend hiervon ist es die Aufgabe der vorliegenden Erfindung, ein Verfahren zur Trennung mindestens einer Flüssigkeit und eines Formkörpers vorzuschlagen, das die Einschränkungen und Nachteile des Standes der Technik nicht aufweist.

Insbesondere soll ein Verfahren bereitgestellt werden, das eine Wiederbenutzung des Formkörpers ermöglicht sowie einen kontinuierlichen Prozess zur Trennung von Flüssigkeiten.

Diese Aufgabe wird im Hinblick auf das Verfahren durch die Verfahrensschritte des Anspruchs 1, und im Hinblick auf die Verwendung des Verfahrens durch die Merkmale des Anspruchs 8 gelöst. Die Unteransprüche beschreiben jeweils vorteilhafte Ausgestaltungen der Erfindung.

Die vorliegende Erfindung befasst sich mit einem Verfahren zur Trennung mindestens einer Flüssigkeit von einem Formkörper. In einem ersten Verfahrensschritt a) wird ein Formkörper umfassend zumindest teilweise ein Formgedächtnismaterial bereitgestellt, wobei der Formkörper eine drei-dimensionale Oberflächenstruktur aufweist, die in einer permanenten Form zumindest teilweise eine hydrophobe und/oder eine superhydrophobe Oberfläche besitzt. Im zweiten Verfahrensschritt b) wird der Formkörper mit mindestens einer Flüssigkeit oder mit einem Gemisch aus mehreren Flüssigkeiten in Kontakt gebracht, wobei mindestens eine Flüssigkeit selektiv an dem Formkörper haften wird. Im weiteren Verfahrensschritt c) wird die Oberflächenstruktur in eine temporäre Form mittels Plandrücken überführt, wobei die zumindest teilweise hydrophobe und/oder superhydrophobe Oberfläche minimiert wird. Somit haftet die mindestens eine Flüssigkeit nicht mehr an der Oberfläche des Formkörpers. Daraufhin wird im Verfahrensschritt d) die mindestens eine Flüssigkeit entnommen und im nächsten Verfahrensschritt e) wird die Oberflächenstruktur in die permanente Form rückgestellt.

Als superhydrophil wird eine Oberfläche bezeichnet, die vollständig mit Wasser benetzbar ist, wobei der Spreitparameter S > 0 ist. Analog dazu ist ein superlipophiles Material so lipophil oder ölaffin, dass sich das Öl komplett auf der Oberfläche verteilt bis zur vollständigen Benetzung mit mindestens einer Monolage. Als superhydrophob wird eine äußerst hydrophobe Oberfläche definiert, die sehr schwer benetzbar ist, d.h. bei der die entsprechenden Kontaktwinkel eines Wassertropfens grösser als 150° sind.

Bezüglich ihrer Benetzbarkeit mit Wasser werden Oberflächen in vier Gruppen unterteilt:
- Oberflächen, die von Wasser vollständig benetzt werden, bzw. auf denen Kontaktwinkel von weniger als 10° vorliegen, werden superhydrophil genannt
- Oberflächen, auf denen Wassertropfen Kontaktwinkel von mehr als 10° aber weniger als 90° bilden, werden als hydrophil bezeichnet
- Ist der Kontaktwinkel 90° oder größer, so nennt man die Oberfläche hydrophob
- Bei sehr großen Kontaktwinkeln von über 150° spricht man von superhydrophoben Oberflächen.
Aufgrund der typischen Materialeigenschaften von den eigensetzten Polymeren sind diese gleichzeitig lipophil oder oleophil. Öl bildet vorzugsweise einen Kontaktwinkel kleiner als 90° aus. Durch die drei-dimensionale Oberflächenstruktur werden diese Eigenschaften verstärkt und die Oberflächen werden superliphophil oder superoleophil, d.h. Öl bildet Kontaktwinkel vorzugsweise kleiner als 10°.
In einer besonderen Ausgestaltung ist der Formkörper aus einem Formgedächtnismaterial gebildet oder mit diesem beschichtet. Die Rückstellung des Formgedächtnismaterials verursacht somit die direkte Rückstellung der Oberflächenstruktur in die permanente Form. Alternativ bildet das Formgedächtnismaterial die Trägerstruktur für eine Beschichtung oder der Formkörper ist vom Formgedächtnispolymer durchdrungen. In diesen Fällen wird die Rückstellung der Oberflächenstruktur indirekt über die Rückstellung der Trägerstruktur gewährleistet. Vorzugsweise sind das Beschichtungsmaterial und das restliche Material des Formkörpers elastisch.
Vorzugsweise wird zum Plandrücken eine Rolle oder eine Walze benutzt.

In der Ausgestaltung der Erfindung ist die Oberflächenstruktur eine Kraterstruktur, wobei vorzugsweise auf den Oberkanten der Krater Polymerhärchen ausgebildet sind. Die Härchen erhöhen die Selektivität der Aufnahme der mindestens einen Flüssigkeit gegenüber'den anderen Flüssigkeiten. Dabei weisen die Krater des Formkörpers einen mittleren Durchmesser von 2 µm bis 250 µm und eine Höhe von 1 µm bis 500 µm, auf deren Oberkanten Polymerhärchen mit einer Länge von 0,5 µm bis 200 µm ausgebildet sind.
Gemäß einer weiteren bevorzugten Ausführungsform der vorliegenden Erfindung ist das Formgedächtnismaterial aus der Gruppe bestehend aus Polymeren, metallischen Legierungen, Keramiken und Gelen ausgewählt. Geeignete Formgedächtnismaterialien sind, ohne Einschränkung darauf, Formgedächtnislegierungen (SMA), Formgedächtnispolymere (SMP), elektroaktive Polymere (EAP), ferromagnetische SMA, magnetische SMA, elektrorheologische Fluide (ER), magnetorheologische Fluide (MR), dielektrische Elastomere, ionische Polymer-Metall-Verbundstoffe (IPMC lonic Polymer Metal Composites), Piezoelektrika, Piezokeramiken, verschiedene Kombinationen der vorstehenden Materialien. Zusätzlich können Kombinationen der vorstehenden Materialien verwendet werden, um Ergebnisse zu erhalten, die mit einem einzelnen Material nicht erreichbar wären. Beispielsweise kann ein SMP thermisch geschaltet werden, während eine Piezokeramik elektrisch geschalten werden kann. Damit können verschiedene Auslöser einen Formeinsatz in verschiedene Richtungen schalten.
In einer besonderen Ausgestaltung ist das Formgedächtnismaterial ein Elastomer, welches sich nach der temporären Verformung alleine, sprich ohne externen Stimulus, wieder in seine permanente Form zurückbegibt, ein Formgedächtnispolymer oder ein thermoplastisches Elastomer. Die Elastomere müssen entsprechende Benetzungseigenschaften und eine ausreichende Elastizität aufweisen. Das Elastomer ist bevorzugt UV- oder chemisch vernetzt. Das Formgedächtnispolymer wird vorzugsweise mittels Licht oder magnetisch aktiviert, besonders bevorzugt thermisch. Die magnetische Aktivierung erfolgt indirekt über die Erwärmung von Magnetpartikel. Der Formkörper ist bevorzugt eine Folie.

Nach einer besonders bevorzugten Ausführungsform ist das Formgedächtnismaterial ein thermisch aktivierbares Formgedächtnispolymer. Thermisch aktivierbare Formgedächtnispolymere (auch "Shape Memory Polymer", SMP) mit einem Übergang vom Glaszustand in den kautschuk-elastischen Bereich bieten die Möglichkeit, verschiedene Zustände in Abhängigkeit der Temperatur (permanente Form bei T > T_{g}; temporäre Form bei T_{g} > T > Ttrans) zu programmieren. Hierbei entspricht bei T_{g} der Glasübergangstemperatur und Tₜᵣₐₙₛ der Transformationstemperatur. Geeignete Formgedächtnispolymere können einschließlich thermoplastische, warmhärtende, einander durchdringende Netze sein. Beispiele für geeignete Polymerkomponenten, ohne hierauf beschränkt zu sein, schließen Polyphosphazen, Polyvinylalkohole, Polyaminde, Polyesteramide, Polyaminosäuren, Polycarbonate, Polyanhydride, Polyacrylate, Polyalkylenglycole, Polyalkylenterephtalate, Polyalkylenoxide, Polyorthoester, Polyvinylether, Polyvinylester, Polyvinylhalogenide, Polyester, Polylactide, Polyglycolide, Polysiloxane, Polyurethane, Polyether, Polyetheramide, Polyetherester, Copolymer und Kombinationen davon ein. Fachleute können unter Verwendung bekannter Chemie und Verarbeitungstechniken ohne übermäßiges Experimentieren mit diesen Komponenten Formgedächtnispolymere mit gewünschten Eigenschaften herstellen. Beispiele für geeignete und kommerziell erhältliche thermisch aktivierbare Formgedächtnispolymere sind Tecoflex® und TecoPlast®.

In einer weiteren Ausgestaltung ist die mindestens eine Flüssigkeit unpolar, bevorzugt flüssige Kohlenwasserstoffe und besonders bevorzugt Öl.

In einer besonderen Ausgestaltung ist der Formkörper zumindest teilweise auf mindestens einer ersten Walze aufgebracht und während Verfahrensschritt c) in Kontakt zumindest teilweise mit einer zweiten Walze, die Oberflächenstruktur durch radialen Druck in eine temporäre Form überführt.

Vorzugsweise wird zunächst ein Formkörper mittels Heißziehen als permanente Form eines Formgedächtnismaterials hergestellt. Dieser strukturierte Formkörper wird vorzugsweise auf die erste Walze, bzw. einer ersten Rolle befestigt. Die erste und die zweite Walzen sind bevorzugt unstrukturierte Stahlrollen.

In einer weiteren Ausgestaltung wird der strukturierte Formkörper als Band über zwei erste Walzen laufengelassen, wobei der Formkörper wiederum von einer zweiten Walze flachgedrückt wird.

In einer besonderen Ausgestaltung ist die Herstellung des strukturierten Formkörpers, sprich in seiner permanenten Form, direkt auf der ersten Walze möglich, wenn ein unstrukturierter Formkörper darauf befestigt wurde.

Als Formeinsatz kommt hierbei vorzugsweise eine mittels Sandstrahlen strukturierte Stahlplatte, oder, wenn die Struktur im Roll-to-Roll-Verfahren hergestellt wird, eine mittels Sandstrahlen strukturierte Stahlrolle zum Einsatz.

In einer besonderen Ausgestaltung wird die erste Walze mit dem strukturierten Formkörper mit einer Kraft, die vom Material und der Größe und Breite der Rolle abhängig ist, mit einer zweiten Walze in Kontakt gebracht, sodass eine Roll-to-Rollähnliche Vorrichtung entsteht. Die mit dem Formkörper bedeckte erste Walze wird dann in mindestens eine Flüssigkeit oder in ein Gemisch von mehreren Flüssigkeiten eingetaucht. Durch Drehen der mit dem Formkörper versehenen ersten Walze wird die selektive Aufnahme der mindestens einen Flüssigkeit aus dem Gemisch ermöglicht. Die zweite Walze befindet sich dabei in Kontakt mit dieser, und dreht sich entgegengesetzt. Nachdem der Formkörper mit der mindestens einen Flüssigkeit den höchsten Punkt der ersten Walze überschritten hat, wird der Formkörper von der zweiten Walze flachgedrückt, wodurch die am Formkörper adsorbierte mindestens eine Flüssigkeit regelrecht aus diesem herausgedrückt wird. Vorzugsweise werden durch eine leichte Neigung der Vorrichtung ein gezieltes Abfließen der mindestens einen Flüssigkeit, und damit deren gezieltes Auffangen ermöglicht.
In einer besonderen Ausgestaltung ist ein Absaugen der mindestens einen Flüssigkeit über dem Kontaktpunkt der Walzen möglich. Das flachgedrückte und somit von der mindestens einen Flüssigkeit befreite Elastomer wird sich, sobald die Krafteinwirkung der zweiten Walze nachlässt, automatisch zur permanenten strukturierten Form zurückverformt. Das Formgedächtnispolymer wird hingegen vor dem erneuten Eintauchen in das Gemisch vorzugsweise durch warme Luft erwärmt, was die Wiederherstellung der permanenten Form des Formgedächtnispolymers auslöst, und somit dessen Wiederverwendbarkeit sicherstellt. Somit ist der Prozess kontinuierlich.
Vorzugsweise wird der Formkörper nach dem Verfahren in DE 10 2013 109 621 A1 hergestellt, wobei er eine superhydrophobe Oberfläche aus einem Polymer aufweist, die mittels eines besonders ausgestalteten Umformverfahrens erhältlich ist. Das eingesetzte Polymer selbst kann hydrophilen oder hydrophoben Ursprungscharakter aufweisen. Die Oberfläche des Formkörpers weist eine Kraterstruktur mit Kratern mit einem mittleren Durchmesser von 2 µm bis 250 µm und einer Höhe von 1 µm bis 500 µm auf, auf deren Oberkanten Polymerhärchen mit einer Länge von 0,5 µm bis 200 µm ausgebildet sind.#

In einer ersten Ausgestaltung entspricht die Länge der Polymerhärchen dem 0,5-fachen bis 10-fachen der mittleren Durchmesser der Krater. Wie sich aus damit durchgeführten Versuchen ergab, weisen diese Strukturen einen weitgehend vollständig wasserabweisenden Charakter auf und ahmen durch ihre geometrische Ausprägung den Lotuseffekt nach. Durch Heißziehen strukturierte Polymerfolien werden Oberflächen hergestellt, die gleichzeitig superlipophil und superhydrophob sind, und die somit selektiv unpolare Flüssigkeiten wie Öl adsorbieren, und gleichzeitig polare Flüssigkeiten wie Wasser abweisen.

In einer zweiten Ausgestaltung entspricht die Länge der Polymerhärchen dem 0,01-fachen bis 0,5-fachen der mittleren Durchmesser der Krater. Wie sich aus durchgeführten Versuchen ergab, ermöglichen diese Strukturen als Funktion der Dichte der Krater zusammen mit der Dichte der sich auf der Oberkante der Krater befindlichen Polymerhärchen keine oder eine hohe Haftung der Oberfläche des Formkörpers insbesondere zu polaren Flüssigkeiten wie Wasser. Bei geeigneter Wahl dieser Funktion lassen sich damit auf der Oberfläche des Formkörpers Strukturen ausbilden, die in der Lage sind, Wassertropfen festzuhalten.

Der Formkörper ist vorzugsweise erhältlich durch ein Verfahren, das die Verfahrensschritte A) bis D) umfasst.

In einer besonderen Ausgestaltung wird in einem ersten **Verfahrensschritt A)** zunächst ein unstrukturierter Formkörper zwischen einer ersten Platte und einer Polymerfolie bereitgestellt.

In einer weiteren Ausgestaltung umfasst der Formkörper auch eine Polymerfolie, hier ein ebenes und ausgedehntes Gebilde aus einem Polymer, insbesondere ein thermoplastischen Polymer (Thermoplast), verstanden, das eine Dicke von 1 µm bis 10 cm, bevorzugt von 250 µm bis 2mm, aufweist.

Die Herstellung des Verbunds aus der ersten Platte und des Formkörpers erfolgt vorzugsweise, indem hierzu zunächst der Formkörper zwischen die erste Platte und eine zweite Platte eingelegt wird. In der Praxis besitzt stets eine der beiden Platten (erste Platte) eine höhere Haftung zum Polymer, während die andere der beiden Platten (zweite Platte) eine geringere Haftung zum Polymer aufweist, insbesondere dann, wenn sie bereits eine polierte oder geschliffene Oberfläche besitzt, oder indem eine Trennschicht zwischen ihr und dem Formkörper eingelegt wird. Um den Verbund aus der Polymerfolie mit der ersten, gut haftenden Platte zu erzeugen, werden anschließend vorzugsweise beide Platten auf eine Temperatur oberhalb der Glasübergangstemperatur T_{g} des in dem Formkörper enthaltenen Polymers erhitzt, wobei das erweichte Polymer durch ein Aufbringen einer Prägekraft derart an die erste Platte gepresst wird, dass dadurch der Verbund aus dem Formkörper mit der ersten Platte gebildet und abschließend Formkörper und Gegenplatte voneinander getrennt wird.

In einem zweiten **Verfahrensschritt B)** wird eine dritte Platte bereitgestellt, die Rauheiten besitzt, die über eine mittlere Rauheit Rₐ' von 1 µm bis 20 µm, bevorzugt von 8 µm bis 15 µm, und über eine gemittelte Rautiefe R_{z}' von 30 µm bis 100 µm, bevorzugt von 40 µm bis 50 µm, verfügen. Das Erzeugen der erforderlichen Rauheiten erfolgt vorzugsweise durch eine Einwirkung von Partikeln, bevorzugt Sandstrahlen, auf mindestens einer Seite der dritten Platte.

In einem dritten **Verfahrensschritt C),** der den eigentlichen Umformschritt darstellt, werden an der Oberfläche des Formkörpers die oben beschriebenen gewünschten Strukturen erzeugt. Die dritte Platte dient im Umformverfahren als Formeinsatzplatte und wird demgemäß gegenüber dem in Verfahrensschritt a) erzeugten Verbund aus der ersten Platte und dem Formkörper platziert, ohne bereits jetzt den Verbund zu berühren. Hieran anschließend wird die dritte Platte über die Glasübergangstemperatur T_{g} des in dem Formkörper enthaltenden Polymers erwärmt, wobei der Verbund aus der ersten Platte und der Polymerfolie selbst nicht erwärmt wird. Tritt daraufhin die nun heiße dritte Platte in ihrer Eigenschaft als Formeinsatzplatte unter Krafteinwirkung mit dem Formkörper in Kontakt, wird das Polymer aus dem Formkörper teilweise in die bestehenden Rauheiten der dritten Platte eingepresst.

In einem vierten **Verfahrensschritt D),** der den Entformvorgang darstellt, wird die der dritten Platte zugewandte andere Oberfläche des Formkörpers durch eine Relativbewegung zwischen der ersten Platte aus dem Verbund und der als Formeinsatzplatte dienenden dritten Platte strukturiert, solange der Formkörper, der sich im Verbund mit der ersten Platte befindet und daher durch die Relativbewegung mit erfasst wird, während des Entformvorgangs weiterhin erweicht bleibt, d. h. solange ihre Temperatur ungefähr der Glasübergangstemperatur entspricht, und sich hierdurch in die Länge ziehen lässt. Die Richtung der Relativbewegung ist hierbei im Wesentlichen antiparallel zur Richtung der Krafteinwirkung und senkrecht oder schräg bzgl. der mittleren Oberfläche der ersten Platte, einschließlich des damit im Verbund stehenden Formkörpers, und der dritten Platte.

Die genaue geometrische Ausprägung der Strukturen wird hierbei durch eine fachmännisch geläufige Wahl eines Parametersatzes, der die folgenden Parameter
- *Temperatur,* auf die die dritte Platte während des Verfahrensschritts b) erwärmt wird,
- *Rauheit* der dritten Platte,
- *Höhe der Kraft,* mit der die heiße dritte Platte während des Verfahrensschritts b) in ihrer Eigenschaft als Formeinsatzplatte mit dem Formkörper in Kontakt tritt,
- *Haltezeit,* während der die Kraft auf den Formkörper einwirkt, und
- *Entformgeschwindigkeit,* mit der die Relativbewegung zwischen der ersten Platte aus dem Verbund und der als Formeinsatzplatte dienenden dritten Platte erfolgt, umfasst, eingestellt.

Abhängig vom gewählten Parametersatz, insbesondere bei einer Temperatur unterhalb des Schmelzbereichs des Polymers, erfolgt ein vorzugsweise rückstandsfreies Entformen (*Ziehen*) der eingepressten Polymerfolie von der noch erwärmten dritten Platte, wodurch dichte, feine Polymerhärchen gezogen werden, die in Form einer Kraterstruktur angeordnet sind. Durch ihre Art der geometrischen Ausprägung ahmen diese Strukturen den Lotuseffekt nach.

Bei einem anders gewählten Parametersatz, insbesondere bei einer Temperatur im Schmelzbereich des Polymers, führt ein Entformen des eingepressten Formkörpers von der noch erwärmten dritten Platte zu einem *Auseinanderreißen* der Polymerschicht, wodurch feine Krater erzeugt werden, an deren Oberkante sich kleinste Polymerhärchen befinden. Diese Strukturen ermöglichen als Funktion der Dichte der Krater zusammen mit der Dichte der sich auf der Oberkante der Krater befindlichen Polymerhärchen eine hohe Haftung der geformten Polymerschicht insbesondere zu Wasser.

Bei einem weiteren Parametersatz, insbesondere bei einer Temperatur, die zwischen den bisher beschriebenen Ausgestaltungen liegt, werden beim Entformen Krater erzeugt, an deren Oberkante sich längere Polymerhärchen befinden, die im Vergleich zu einem mittleren Grad an Haftung der geformten Polymerschicht insbesondere zu Wasser führen.

In einer alternativen Ausgestaltung sind die im vorliegenden Verfahren eingesetzte erste Platte und/oder zweite Platte und/ oder dritte Platte in Form einer Walze ausgestaltet. Eine derartige Ausgestaltung ermöglicht einen erheblich höheren Durchsatz bei der praktischen Durchführung des vorliegenden Verfahrens.

Um die Trennung mehrerer Flüssigkeiten in einem kontinuierlichen Prozess zu ermöglichen, und um unnötigen Abfall zu vermeiden, wird vorzugsweise eine derartig strukturierte Oberfläche in der vorliegenden Erfindung wahlweise aus einem Elastomer, oder aus einem Formgedächtnispolymer (FGP) hergestellt. Formgedächtnispolymere haben die Eigenschaft, dass sie sich nach einer temporären Formänderung auf einen bestimmten Stimulus, vorzugsweise Temperatur, sich in eine eingeprägte ursprüngliche, sogenannte permanente Form zurückverformen. Elastomere begeben sich nach einer temporären Formänderung ebenfalls in ihre Ausgangsform zurück, jedoch ohne die Möglichkeit, ihre temporäre Form für eine gewünschte Zeit beizubehalten.

Dieser Effekt der Rückverformung wird genutzt, um nach dem Entfernen der mindestens einen Flüssigkeit von der Oberfläche die Wiederverwendung der Oberflächenstruktur zu ermöglichen.

Die vorliegende Erfindung betrifft weiterhin eine Verwendung des Verfahrens zur mehrfachen Trennung von Flüssigkeiten. Vorzugsweise wird das Verfahren zur Trennung von unpolaren und polaren Flüssigkeiten verwendet, wobei die unpolare Flüssigkeit auf dem Formkörper selektiv aufgenommen wird und der Formkörper nach jedem Einsatz wiederverwendbar ist. Vorzugsweise wird dadurch Öl von Wasser getrennt.

In einer besonderen Ausgestaltung wird das Verfahren verwendet, um kontinuierlich eine Flüssigkeit von einem Formkörper zu trennen.

Weiterhin wird das erfindungsgemäße Verfahren genutzt, um Öl aus Wasser zu entfernen, zur Aufbereitung von Kühlwasser, zum Entfernen von Öl aus Kühlwasser oder aus ölverschmutzten Gewässern, zum Säubern einer Ölpest oder zum Entfernen von Öl aus Abwasser in Kläranlagen.

Ein besonderer Vorteil der vorliegenden Erfindung ist, dass ein kontinuierlicher Prozess zur hochselektiven, hocheffizienten Reinigung ölverschmutzter Gewässer und zur Rückgewinnung des Öls ermöglicht wird. Kennzeichnend ist, dass die Struktur anschließend wiederhergestellt wird, bzw. sich selbst zurückbildet, wodurch die strukturierte Oberfläche ohne chemische Behandlung wiederverwendet werden kann. Dabei entstehen keine Abfälle und keine Umweltrisiken, und der Ressourcenverbrauch wird auf ein Minimum reduziert. Dass der Formkörper auf einer Rolle befestigt ist bzw. bandartig über Rollen geführt wird, entsteht ein endloser, kontinuierlicher Prozess. Der Formkörper wird dabei wiederverwendet, es muss nicht nach einmaliger Nutzung ersetzt werden.

Durch die Nutzung von den selektiven Oberflächenstrukturen ist es außerdem möglich, verschiedene Flüssigkeiten durch den Einsatz verschiedener Kraterstrukturen voneinander zu trennen. Die hierzu benötigten verschiedenen Arten von Kraterstrukturen würden durch Variation von Parametern bei der Herstellung (Temperatur, Zeiten, Ziehgeschwindigkeit,...) sowie durch Variation des unstrukturierten Formkörpers (Material, Dicke, ...) erreicht.

Der Einsatz einer Rolle zum Herausdrücken der unpolaren Flüssigkeit und gleichzeitigen Flachdrücken der Oberflächenstruktur erlaubt den Einsatz nanostrukturierter Oberflächen. Hierdurch wird es möglich, bei gleichem Materialeinsatz (gleich große Maschine) in derselben Zeit eine höhere Förderleistung zu erzielen als bei herkömmlichen Skimmerverfahren, da der strukturierte Formkörper eine höhere Aufnahmekapazität pro Fläche hat als eine glatte Oberfläche. Durch das superhydrophobe Verhalten des strukturierten Formkörpers ist außerdem ein noch geringerer Restwasseranteil als der von Trommelskimmern bereits erreichte Restwasseranteil von 2 % möglich.

Die Erfindung wird im Folgenden anhand von Ausführungsbeispielen und den Figuren näher erläutert. Hierbei zeigen:
**Fig. 1** ein schematischer Ablauf einer Ausführungsform des erfindungsgemäßen Verfahrens,
**Fig. 2** eine erste Ausführungsform eines kontinuierlichen Prozesses zur Trennung von Flüssigkeiten sowie
**Fig. 3** eine zweite Ausführungsform eines kontinuierlichen Prozesses zur Trennung von Flüssigkeiten.
Fig. 4 eine Wasserkontaktwinkelmessung der Oberflächen von fünf Formkörper, welche die erfindungsgemäßen Verfahrensschritte insbesondere die Verfahrensschritte Plandrücken und Reckstellen der Oberflächenstruktur durchlaufen haben.

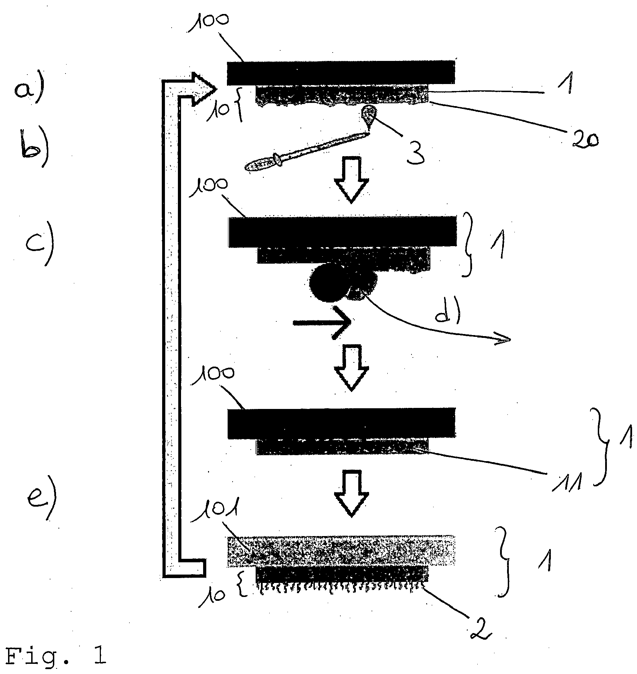

In **Fig. 1** ist der Ablauf einer Ausführungsform des erfindungsgemäßen Verfahrens schematisch dargestellt. **Fig**. **1a** zeigt den Verfahrensschritt a), das Bereitstellen eines Formkörpers **1** umfassend zumindest teilweise ein Formgedächtnispolymer auf einer Stahlplatte **100.** Dabei besitzt das Formgedächtnispolymer in seiner permanenten Form **10** zumindest teilweise eine superhydrophobe Oberfläche, die eine Oberflächenstruktur **2** aufweist. Der Formkörper **1** wird mit mindestens einer Flüssigkeit **3** in Kontakt gebracht, die selektiv an dem Formkörper **1** aufgenommen wird (Fig. **1b**).

Dadurch entsteht eine mit Flüssigkeit benetzte Oberflächenstruktur **20.** Daraufhin wird das Formgedächtnismaterial in seine temporäre Form **11** flachgedrückt, wie in **Fig. 1c** dargestellt. Die mindestens eine Flüssigkeit **3** wird in Verfahrensschritt d) entnommen. Schließlich wird das Formgedächtnispolymer in seine permanente Form **10** zurückgeführt, wie dargestellt beispielhaft durch ein Erwärmen der vorgenannten Stahlplatte (erwärmte Stahlplatte **101**). Dadurch ist die Oberflächenstruktur **2** wieder hergestellt und frei von Flüssigkeit. Dieses Verfahren kann somit erneut eingeleitet werden, wie es der Pfeil zeigt.

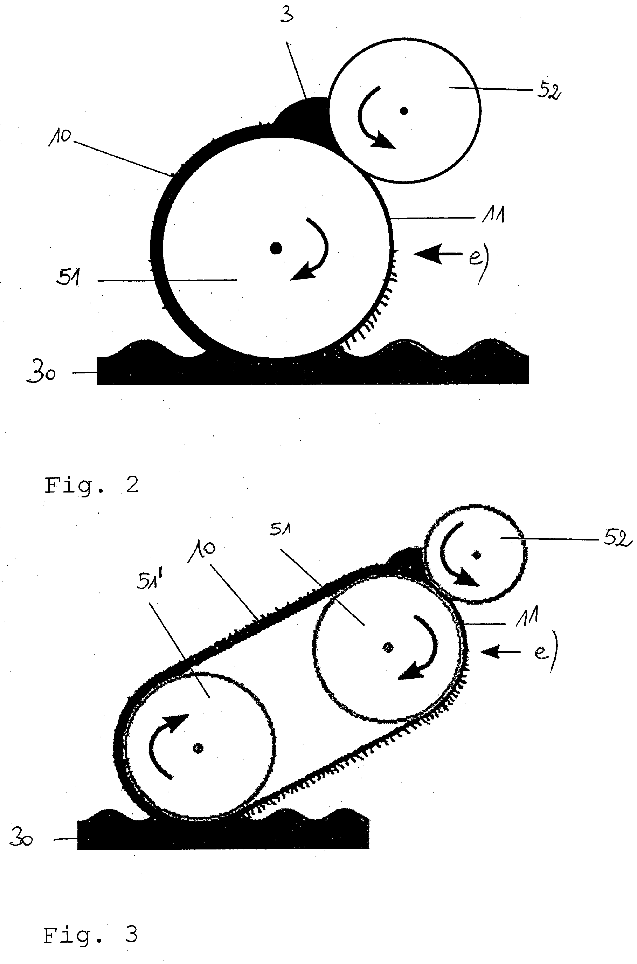

In **Fig. 2** ist das Prinzip des kontinuierlichen Prozesses zur Trennung von Flüssigkeiten dargestellt. Auf der ersten Rolle **51** ist ein FGP oder Elastomer, dessen permanente Form **10** ein heißgezogener strukturierter Formkörper ist. Dieser wird in ein Gemisch **30** eingetaucht, und nimmt dabei selektiv mindestens eine Flüssigkeit auf. Eine zweite Rolle **52** drückt den Formkörper **1** flach, wodurch die mindestens eine Flüssigkeit wieder abgegeben wird und aufgefangen werden kann. Eine leichte Neigung der Vorrichtung gibt dabei vor, in welche Richtung die mindestens eine Flüssigkeit **3** abfließt. Alternativ ist ein Absaugen der mindestens einen Flüssigkeit an dieser Stelle möglich. Durch anschließendes Erwärmen des FGP (Schritt **e)),** der bei Elastomeren wegfällt, wird der Formkörper in seine permanente Form **10** wieder hergestellt.

**Fig. 3** zeigt ein alternativer Aufbau, bei dem der nanostrukturierte Formkörper **1** als Band über zwei erste Rollen **51, 51'** läuft, dabei die mindestens eine Flüssigkeit **3** aus dem Gemisch **30** aufnimmt und anschließend von einer zweiten Rolle **52** flachgedrückt wird, wobei der Formkörper **1** seine temporäre Form **11** annimmt. Analog zu dem in **Fig. 2** dargestellten Aufbau wird wiederum die mindestens eine Flüssigkeit herausgedrückt und kann abfließen oder abgesaugt werden. Ebenfalls wird der Formkörper **1** im Fall des FGP durch Wärme in seine permanente Form **10** wiederhergestellt (Schritt **e)**), bzw. richtet sich bei Elastomeren selbstständig wieder auf.

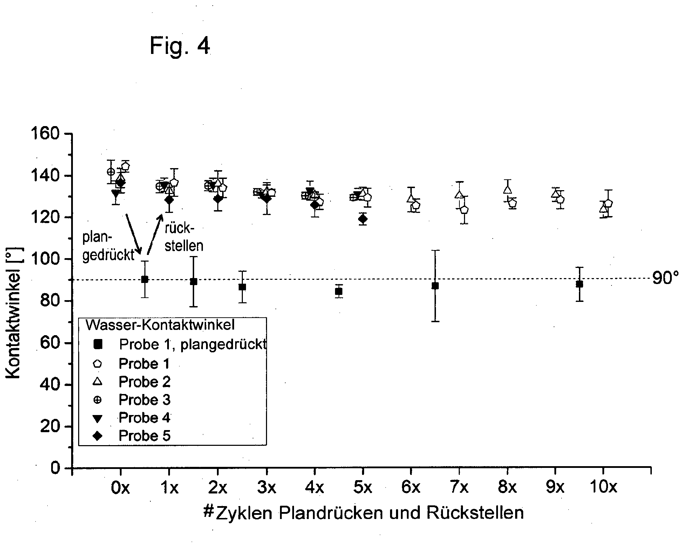

Fig. 4. zeigt die Entwicklung des Wasserkontaktwinkels auf fünf Formkörper, jeweils aufweisend eine drei-dimensionale Oberflächenstruktur. Diese Formkörper durchlaufen das erfindungsgemäße Verfahren 10 Mal, wobei ein Zyklus insbesondere die Verfahrensschritte des Plandrückens der Oberflächenstruktur und das Rückstellen der Oberflächenstruktur umfasst. Durch das Plandrücken der Oberflächenstruktur des Formkörpers entsteht eine planare Oberfläche, worauf sich Wasserkontaktwinkel von weniger als 90° messen lassen und die Oberfläche dadurch hydrophil wird. Durch die Rückstellung gewinnen die Oberflächen wieder ihre drei-dimensionale Struktur zurück. Die Fig. 4 zeigt dabei, dass die Wasserkontaktwinkel über die Zyklen stabil bleiben. Die Eigenschaften dieser Oberflächenstruktur bezüglich der Benetzbarkeit bleiben demnach erhalten. Es lassen sich insbesondere Wasserkontaktwinkel zwischen 120° und 140° messen, welche für eine erhöhte hydrophobe Oberfläche stehen. Dies zeigt, dass die Wiederherstellung der drei-dimensionalen Oberflächenstruktur auch nach mehrmaligem Plandrücken gelingt und die Wiederverwendbarkeit der Formkörper gewährleistet ist. Die Benetzbarkeit der Oberfläche mit Wasser durch Nutzung des Formgedächtniseffekts ist reversibel veränderbar.

### Ausführungsbeispiel 1:

Ein Formkörper wurde bereitgestellt umfassend ein Formgedächtnispolymer des Typs Tecoflex ® EG-72D (Firma The Lubrizol Corporation). Es zeichnet sich unter anderem durch seine vorteilhaft niedrige Umwandlungstemperatur von ca. 40 °C aus, was den Energieaufwand für diesen Prozess sehr klein hält. Ein kopfüber auf einer sandgestrahlten Platte befestigtes Stück dieses strukturierten Formkörpers in seiner permanenten Form wurde mit Öl in Kontakt gebracht, welches adsorbiert wurde (siehe **Fig. 1a****+b**). Mittels einer Rolle wurde anschließend unter einem Druck von 50 kN die Oberflächenstrukturen flachgedrückt, wodurch die Oberflächenstruktur zusammengepresst und dabei das Öl aus dieser herausgedrückt wurde (siehe **Fig. 1c**). Die temporär flachgedrückte Oberflächenstruktur in **Fig. 1d** wurde durch Erwärmen der sandgestrahlten Platte auf knapp über 40°C in ihre permanente Form rückgestellt. Anschließend wurde erneut Öl aufgetragen und das Verfahren fünf Mal wiederholt.

### Ausführungsbeispiel 2:

Fünf Formkörper (Probe 1 bis 5) umfassend Tecoflex ® EG-72D wurden bis zu zehn Mal plangedrückt und rückgestellt, der Kontaktwinkel von Wasser auf der jeweils rückgestellten Oberfläche der Formkörper wurde gemessen, dieser liegt im erhöhten hydrophoben Bereich (>120°). Beispielhaft wurde auf Probe 1 außerdem nach dem 1., 2., 3., 5., 7. und 10. Plandrücken der Kontaktwinkel von Wasser auf der temporär plangedrückten Probe gemessen, wobei Werte im hydrophilen Bereich (90° und weniger) gemessen wurden. (n=5 Messungen pro Datenpunkt, der Fehlerbalken gibt die Standardabweichung an)

Für die statische Kontaktwinkelmessung mittels computergestützter Tropfenkonturanalyse wurde mit einem Kontaktwinkelmessgerät des Typs OCA 40 von Dataphysics ein Wassertropfen (5 µl) deionisiertes Wasser auf der zu untersuchenden Oberfläche abgesetzt. Das von einer CCD-Kamera aufgenommene Bild des auf der Oberfläche aufliegenden Tropfens wurde zur Bestimmung des Kontaktwinkels mit der Software SCA 20 ausgewertet.

### Literatur

[1] Korhonen et al. Hydrophobic nanocellulose aerogels as floating, sustainable, reusable and recyclable oil absorbents, ACS Appl. Mater. Interfaces, 3, p. 1813, 2011
[2] http://www.hydrotechnik-luebeck.de/olseparation/ oelskimmer-ausruestung-fuer-die-oelwehr/
[3] M. Friess http://www.thonke-iv.de/Wasser.pdf
[4] http://www.raw-international.com/produkteloesungen/sortiment/oel-skimmer/trommelskimmer.html

## Patentansprüche

1. Verfahren zur Trennung mindestens einer Flüssigkeit von einem Formkörper mit den Verfahrensschritten
a) Bereitstellen eines Formkörpers (1) umfassend zumindest teilweise ein Formgedächtnismaterial, wobei der Formkörper (1) eine drei-dimensionale Oberflächenstruktur (2) aufweist, die Krater mit einem mittleren Durchmesser von 2 µm bis 250 µm und eine Höhe von 1 µm bis 500 µm aufweist, auf deren Oberkanten Polymerhärchen mit einer Länge von 0,5 µm bis 200 µm ausgebildet sind und die in einer permanenten Form (10) zumindest teilweise eine superhydrophobe Oberfläche und/oder eine hydrophobe Oberfläche besitzt,
b) Inkontaktbringen des Formkörpers (1) mit mindestens einer Flüssigkeit (3) oder mit einem Gemisch aus mehreren Flüssigkeiten (30), wobei mindestens eine Flüssigkeit (3) selektiv an dem Formkörper (1) haften wird,
c) Überführen der Oberflächenstruktur (2) in eine temporäre Form (11) mittels Plandrücken, wobei die zumindest teilweise superhydrophobe Oberfläche und/oder hydrophobe Oberfläche minimiert wird,
d) Entnahme der mindestens einen Flüssigkeit (3),
e) Rückstellen der Oberflächenstruktur (2) in die permanente Form (10).

2. Verfahren zur Trennung mindestens einer Flüssigkeit von einem Formkörper nach Anspruch 1, wobei Verfahrensschritte a) bis e) mindestens einmal wiederholt werden.

3. Verfahren zur Trennung mindestens einer Flüssigkeit von einem Formkörper nach Anspruch 1 oder 2, wobei das Formgedächtnismaterial aus der Gruppe bestehend aus Polymeren, metallischen Legierungen, Keramiken und Gelen ausgewählt ist.

4. Verfahren zur Trennung mindestens einer Flüssigkeit von einem Formkörper nach einem der Ansprüche 1 bis 3, wobei das Formgedächtnismaterial ein thermisch aktivierbares Formgedächtnispolymer oder ein Elastomer oder ein thermoplastisches Elastomer ist.

5. Verfahren zur Trennung mindestens einer Flüssigkeit von einem Formkörper nach einem der Ansprüche 1 bis 4, wobei die mindestens eine Flüssigkeit unpolar ist.

6. Verfahren zur Trennung mindestens einer Flüssigkeit von einem Formkörper nach einem der Ansprüche 1 bis 5, wobei die mindestens eine Flüssigkeit Öl ist.

7. Verfahren zur Trennung mindestens einer Flüssigkeit von einem Formkörper nach einem der Ansprüche 1 bis 6, wobei der Formkörper zumindest teilweise auf mindestens einer ersten Walze (51) aufgebracht ist, und der Formkörper (1) zumindest teilweise in Kontakt mit mindestens einer zweiten Walze (52) ist, welche die Oberflächenstruktur durch radialen Druck in die temporäre Form (11) überführt.

8. Verwendung des Verfahrens nach einem der Ansprüche 1 bis 7 zur mehrfachen Trennung von Flüssigkeiten.

9. Verwendung des Verfahrens nach Anspruch 8 zur kontinuierlichen Trennung mindestens einer Flüssigkeit von einem Formkörper.

## Claims

1. Method for separating at least one liquid from a moulding, with the method steps:
a) providing a moulding (1), comprising at least partially a shape-memory material, wherein the moulding (1) exhibits a three-dimensional surface structure (2), which in turn comprises craters with a mean diameter from 2 µm to 250 µm and a height from 1 µm to 500 µm, formed on the upper edges of which are polymer hairs with a length from 0.5 µm to 200 µm, and which in a permanent shape (10) has at least partially a superhydrophobic surface and/or a hydrophobic surface,
b) bringing moulding (1) into contact with at least one liquid (3) or with a mixture of several liquids (30), wherein at least one liquid (3) will selectively adhere to the moulding (1),
c) transferring the surface structure (2) into a temporary shape (11) by means of flat pressing, wherein the at least partially superhydrophobic surface and/or hydrophobic surface is minimised,
d) removal of the at least one liquid (3),
e) reversion of the surface structure (2) into the permanent shape (10).

2. Method for separating at least one liquid from a moulding according to claim 1, wherein method steps a) to e) are repeated at least once.

3. Method for separating at least one liquid from a moulding according to claim 1 or 2, wherein the shape-memory material is selected from the group consisting of polymers, metallic alloys, ceramics, and gels.

4. Method for separating at least one liquid from a moulding according to any one of claims 1 to 3, wherein the shape-memory material is a thermally activatable shape-memory polymer or an elastomer or a thermoplastic elastomer.

5. Method for separating at least one liquid from a moulding according to any one of claims 1 to 4, wherein the at least one liquid is unipolar.

6. Method for separating at least one liquid from a moulding according to any one of claims 1 to 5, wherein the at least one liquid is oil.

7. Method for separating at least one liquid from a moulding according to any one of claims 1 to 6, wherein the moulding is applied at least partially by means of a first roller (51), and the moulding (1) is at least partially in contact with at least one second roller (52), which transfer the surface structure by radial pressure into the temporary shape (11).

8. Use of the method according to any one of claims 1 to 7 for the multiple separation of liquids.

9. Use of the method according to claim 8 for the continual separation of at least one liquid from a moulding.

## Revendications

1. Procédé permettant de séparer au moins un liquide d'un corps moulé comprenant des étapes consistant à :
a) se procurer un corps moulé (1) renfermant au moins partiellement un matériau à mémoire de forme, le corps moulé (1) ayant une structure de surface tridimensionnelle (2) comportant des cratères ayant un diamètre moyen de 2 µm à 250 µm et une hauteur de 1 µm à 500 µm, sur les arêtes supérieures desquels sont formés des filaments polymères ayant une longueur de 0,5 µm à 200 µm, et qui a, sous la forme rémanente (10) au moins partiellement une surface superhydrophobe et/ou une surface hydrophobe,
b) mettre en contact le corps moulé (1) avec au moins un liquide (3) ou avec un mélange de plusieurs liquides (30), au moins un liquide (3) adhérant sélectivement sur le corps moulé (1),
c) transférer la structure de surface (2) sous une forme temporaire (11) par compression planaire, la surface au moins partiellement superhydrophobe et/ou la surface hydrophobe étant diminuée au maximum,
d) évacuer le liquide (3),
e) ramener la structure de surface (2) dans sa forme rémanente (10).

2. Procédé permettant de séparer au moins un liquide d'un corps moulé conforme à la revendication 1, selon lequel les étapes a) à e) sont répétées au moins une fois.

3. Procédé permettant de séparer au moins un liquide d'un corps moulé conforme à la revendication 1 ou 2, selon lequel le matériau à mémoire de forme est choisi dans le groupe comportant les matériaux suivants : polymères, alliages métalliques, céramiques et gels.

4. Procédé permettant de séparer au moins un liquide d'un corps moulé conforme à l'une des revendications 1 à 3, selon lequel le matériau à mémoire de forme est un polymère à mémoire de forme pouvant être activé thermiquement ou un élastomère ou un élastomère thermoplastique.

5. Procédé permettant de séparer au moins un liquide d'un corps moulé conforme à l'une des revendications 1, à 4, selon lequel le liquide est non polaire

6. Procédé permettant de séparer au moins un liquide d'un corps moulé conforme à l'une des revendications 1 à 5, selon lequel le liquide est une huile

7. Procédé permettant de séparé au moins un liquide d'un corps moulé conforme à l'une des revendications 1 à 6, selon lequel le corps moulé est appliqué au moins en partie sur au moins un premier rouleau (51) et le corps moulé (1) est mis au moins partiellement en contact avec au moins un second rouleau (52) qui transfère la structure de surface par pression radiale sous sa forme temporaire (11).

8. Utilisation du procédé conforme à l'une des revendications 1 à 7, pour permettre une séparation multiple de liquide.

9. Utilisation du procédé conforme à la revendication 8, pour permettre une séparation en continu d'au moins un liquide d'un corps moulé.
